(19) Europäisches Patentamt
European Patent Office
Office européen des brevets

(11) **EP 2 579 087 B1**

(12) **FASCICULE DE BREVET EUROPEEN**

(45) Date de publication et mention de la délivrance du brevet:
**29.11.2017 Bulletin 2017/48**

(21) Numéro de dépôt: **12187043.0**

(22) Date de dépôt: **02.10.2012**

(51) Int Cl.:
*G02B 23/00* (2006.01)  *G02B 17/08* (2006.01)
*G02B 23/04* (2006.01)  *G02B 27/14* (2006.01)
*F41G 7/26* (2006.01)  *F41G 3/26* (2006.01)
*G02B 17/06* (2006.01)  *G02B 23/14* (2006.01)

(54) **Dispositif bispectral à deux miroirs, système correspondant**

Bispektralvorrichtung mit zwei Spiegeln und entsprechendes System

Two mirror bispectral device, corresponding system

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.10.2011 FR 1158908**

(43) Date de publication de la demande:
**10.04.2013 Bulletin 2013/15**

(73) Titulaire: **Safran Electronics & Defense**
**92100 Boulogne-Billancourt (FR)**

(72) Inventeurs:
• **Cau, Françoise**
**75015 Paris (FR)**
• **Kling, Emmanuel**
**75015 Paris (FR)**

(74) Mandataire: **Regimbeau**
**20, rue de Chazelles**
**75847 Paris Cedex 17 (FR)**

(56) Documents cités:
**US-A1- 2003 185 549    US-A1- 2011 051 121**
**US-B1- 6 359 681**

## Description

DOMAINE TECHNIQUE GENERAL

La présente invention concerne un dispositif adapté pour recevoir un flux lumineux incident comportant une première bande de longueurs d'onde et une deuxième bande de longueurs d'onde, et comportant deux miroirs.

L'invention concerne également un système optique comportant un objectif bispectral et un dispositif précité.

ETAT DE L'ART

Les conduites infrarouges aéroportées de tir de missile sont largement répandues sur les porteurs militaires.

Elles sont notamment intégrées dans des boules gyrostabilisées, des conduites de tir en nacelle pour avions, ou des viseurs d'hélicoptères.

Les conduites infrarouges précédentes présentent cependant des inconvénients.

Les conduites en nacelle et les viseurs connus n'ont en général pas les capacités d'identifier formellement une cible, de la taille d'un blindé léger par exemple, située à la portée maximale du missile.

Or il est préférable qu'il y ait une identification formelle de la cible pendant le processus d'engagement du tir du missile, de sorte qu'aucun tir fratricide ne soit possible.

Une solution possible est d'augmenter la portée de la conduite de tir, ce qui impose à la conduite de tir une chaîne de restitution d'image à très haute résolution et une stabilisation très fine de la ligne de visée, pour assurer l'identification des cibles en limite de portée du missile.

La conduite doit alors comporter un dispositif optronique et mécanique onéreux.

L'amélioration de la résolution de la restitution d'image requiert également une augmentation du diamètre pupillaire du dispositif et/ou une réduction de la longueur d'onde utile du dispositif, tandis que l'augmentation de la portée requiert une diminution du champ.

Or les changeurs de champ connus comportent en général des pièces mobiles qu'il n'est pas souhaitable d'intégrer dans des conduites de tirs aéroportées, notamment du fait de leur coût, de leur fragilité et des vibrations du porteur qui peuvent les mettre en mouvement et perturber ainsi incidemment la ligne de visée.

Par ailleurs les technologies passives d'imageries infrarouges imposent des contraintes d'encombrement important (taille importante de pupille) et de stabilisation qui ne permettent pas d'atteindre les portées requises par les évolutions des missiles. La demande de brevet US 2003/185549) décrit un système de caméra adapté pour traiter simultanément des images de bandes passantes différentes, comprenant un télescope Cassegrain. Les faisceaux sont envoyés, sur deux voies différentes. On connait par le document US 2011/0051121 un télescope de type LIDAR comprenant une fonctionnalité d'imagerie, une fonctionnalité de polarimétrie, et une fonctionnalité de scanner pour étudier un faisceau laser incident.

PRESENTATION DE L'INVENTION

L'invention propose de pallier au moins un de ces inconvénients.

A cet effet, l'invention propose un dispositif adapté pour recevoir un flux lumineux incident comportant une première bande de longueurs d'onde et une deuxième bande de longueurs d'onde, la première bande et la deuxième bandes étant distinctes entre elles, comportant :

- un miroir primaire,
- un miroir secondaire,
- une première lame semi-réfléchissante dichroïque, et
- une deuxième lame semi-réfléchissante dichroïque,

le miroir primaire étant adapté pour recevoir le flux lumineux incident et le réfléchir vers le miroir secondaire ;
le miroir secondaire étant adapté pour recevoir le flux lumineux à partir du miroir primaire et le réfléchir vers la première lame semi-réfléchissante;

le dispositif comportant en outre :

un système de double coudage de la deuxième bande de longueurs d'onde, la première lame semi-réfléchissante étant adaptée pour transmettre la première bande de longueurs d'onde vers un objectif à travers la deuxième lame semi-réfléchissante, et pour réfléchir la deuxième bande de longueurs d'onde vers le système de double coudage de la deuxième bande de longueurs d'onde ;
la deuxième lame semi-réfléchissante étant en outre adaptée pour recevoir la deuxième bande de longueurs d'onde à partir du système de double coudage, et pour réfléchir la deuxième bande de longueurs d'onde vers l'objectif, le dispositif comportant en outre une pupille d'entrée réelle à travers laquelle passe le flux lumineux incident, le miroir secondaire étant adapté pour recevoir le flux lumineux à partir du miroir primaire et le réfléchir pour former une pupille intermédiaire réelle.

L'invention est avantageusement complétée par les caractéristiques suivantes, prises seules ou en une quelconque de leur combinaison techniquement possible :

- la pupille d'entrée du dispositif est située à proximité d'un foyer objet du miroir primaire, et la pupille intermédiaire réelle est située à proximité d'un foyer image du miroir secondaire ;
- la première lame semi-réfléchissante est située à proximité d'un foyer image du miroir secondaire ;
- miroir primaire et le miroir secondaire définissent un système catoptrique afocal à plan image intermédiaire réel ;
- le miroir primaire et le miroir secondaire sont décalés l'un par rapport à l'autre, pour former un dispositif hors d'axe ;
- le miroir primaire comporte une ouverture centrale et le miroir secondaire est placé dans l'axe de l'ouverture centrale, pour former un dispositif sur axe ;
- le miroir secondaire est concave ou convexe.

L'invention concerne également un système optique comportant un objectif bispectral et un dispositif précité.

L'invention présente de nombreux avantages.

Un dispositif selon l'invention est bispectral mais sans changement de champ optique, c'est-à-dire que le dispositif ne comporte pas de pièce mobile pour effectuer un changement de champ.

Un dispositif selon l'invention peut ainsi notamment être intégré dans une conduite de tir, notamment aéroportée, présentant une portée sensiblement identique à la portée d'un missile à guider vers une cible, c'est-à-dire entre 6 et 8 kilomètres.

Le dispositif ne requiert pas un dispositif optronique ou mécanique onéreux de stabilisation de la ligne de visée ni d'augmentation de résolution de la chaîne image.

Du fait que le dispositif est bispectral, il permet notamment de réaliser d'une part une fonction d'identification en imagerie active (IA) sur une voie et d'autre part une fonction de reconnaissance en bande infrarouge (IR) sur une autre voie, à très longue distance. La voie IA permet la poursuite d'un faisceau LASER, généralement pulsé, désignant une cible.

La voie IA d'un dispositif selon l'invention permet une amélioration notable des performances pour l'identification de cibles dans des fonds de scène complexes, et d'identification de cibles à grande portée ou potentiellement par mauvaises conditions météorologiques.

La voie IR permet la détection et la reconnaissance, moins gourmandes en résolution, avec une portée au moins égale à la portée d'identification de la voie IA.

La voie de reconnaissance en IR, par exemple en bande II, et la voie d'identification en IA, par exemple à 1,5$\mu$m environ, sont placées dans le même encombrement. En effet, aux distances de l'ordre de grandeur des portées missiles, la voie IA offre un meilleur rapport encombrement sur performance, de jour comme de nuit.

La voie IA d'imagerie active offre avantageusement une sécurité oculaire, c'est-à-dire travaille à des longueurs d'onde comprises entre 1,5$\mu$m et 1,55$\mu$m pour éviter un dommage à un oeil d'un opérateur.

Les critères connus de résolution de Johnson, associés aux fonctions de reconnaissance et d'identification, imposent un facteur deux sur le rapport des focales des deux voies. C'est pourquoi l'invention intègre judicieusement dans un encombrement optimisé un multiplicateur de longueur focale sur la voie IA par rapport à la voie IR, multiplicateur formé par un système de double coudage. Le coefficient de multiplication de longueur focale est égal à deux fois le pas pixel du détecteur de la voie IA divisé par le pas pixel du détecteur de la voie IR. Le coefficient vaut deux par exemple si un détecteur commun est utilisé pour les deux voies.

La ligne de visée IR et la ligne de visée IA sont parallèles entre elles.

L'invention propose des performances sur la voie IA bien meilleures que les boules gyrostabilisées de l'art antérieur, avec la même taille de pupille pour la voie IR.

L'invention propose des performances sur la voie IR bien meilleures que les viseurs hélicoptères de l'art antérieur qui fonctionnent exclusivement sur la base d'optiques dioptriques, performances bien meilleures de l'invention notamment dans la bande III (8-12$\mu$m), avec un encombrement beaucoup plus faible que l'art antérieur.

L'invention peut avantageusement être appliquée à une nacelle d'attaque air/sol, car elle peut intégrer un capteur d'image en temps réel sur la voie IA, comportant une part très importante de fonctions automatiques de traitement d'images : détection, pistage, reconnaissance, identification et poursuite de cible. Le capteur peut également fonctionner en temps masqué pour un opérateur.

La voie IA offre le meilleur compromis diamètre de pupille/résolution, puisque la longueur d'onde utile est bien inférieure à celles de l'infrarouge en bandes II et III.

Les durées d'intégration très courtes de la voie IA permettent également de s'affranchir des problèmes de résiduelles non nulles de stabilisation.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- les figures 1 à 4 représentent un premier exemple d'un mode de réalisation possible d'un dispositif selon l'invention, avantageusement utilisé dans un système de conduite de tir ;

- la figure 1 représente schématiquement une vue éclatée en perspective d'un dispositif pour une première bande de longueurs d'onde ;
- la figure 2 représente schématiquement une vue de côté d'un dispositif pour la première bande de longueurs d'onde ;
- la figure 3 représente schématiquement une vue éclatée en perspective d'un dispositif pour une deuxième bande de longueurs d'onde ;
- la figure 4 représente schématiquement une vue de côté d'un dispositif pour la deuxième bande de longueurs d'onde ;
- les figures 5 et 6 représentent un deuxième exemple d'un mode de réalisation possible d'un dispositif selon l'invention, avantageusement utilisé dans un système de conduite de tir ;

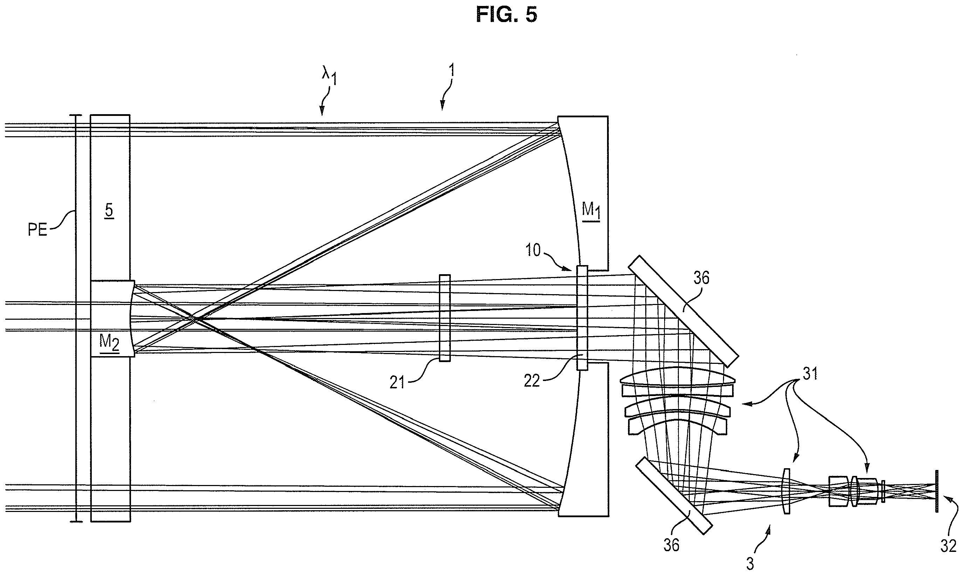

- la figure 5 représente schématiquement une vue de côté d'un dispositif pour la première bande de longueurs d'onde ;

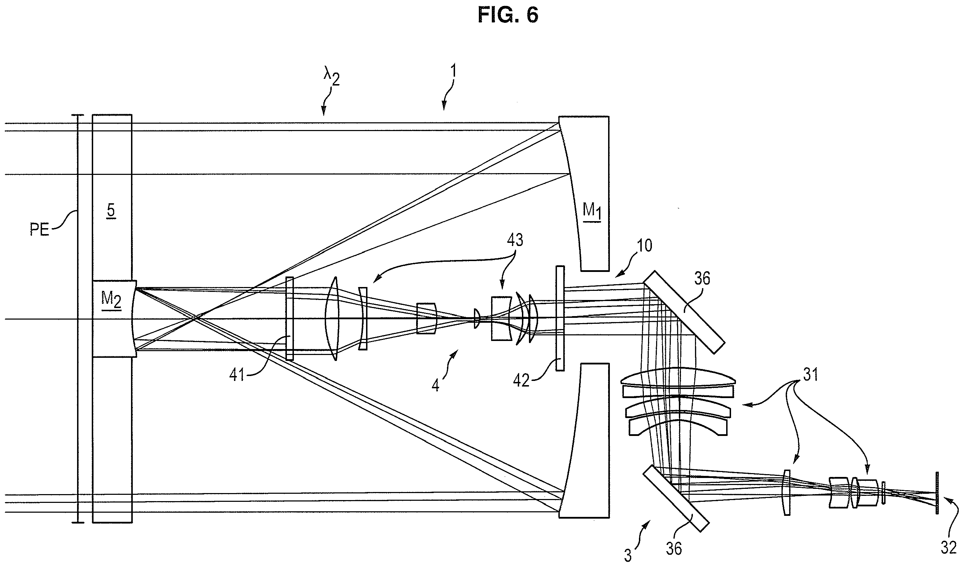

- la figure 6 représente schématiquement une vue de côté d'un dispositif pour la deuxième bande de longueurs d'onde ;

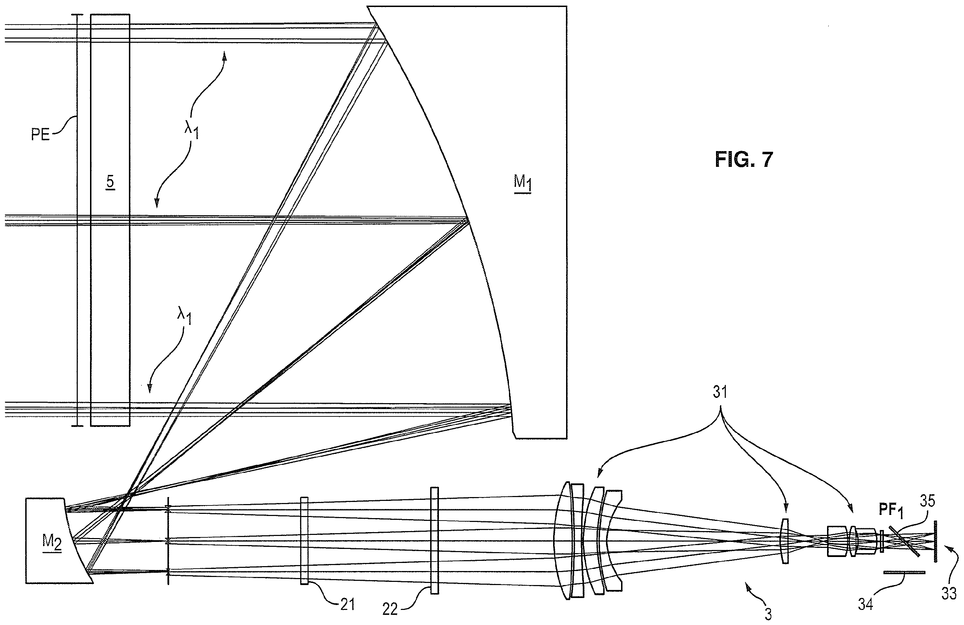

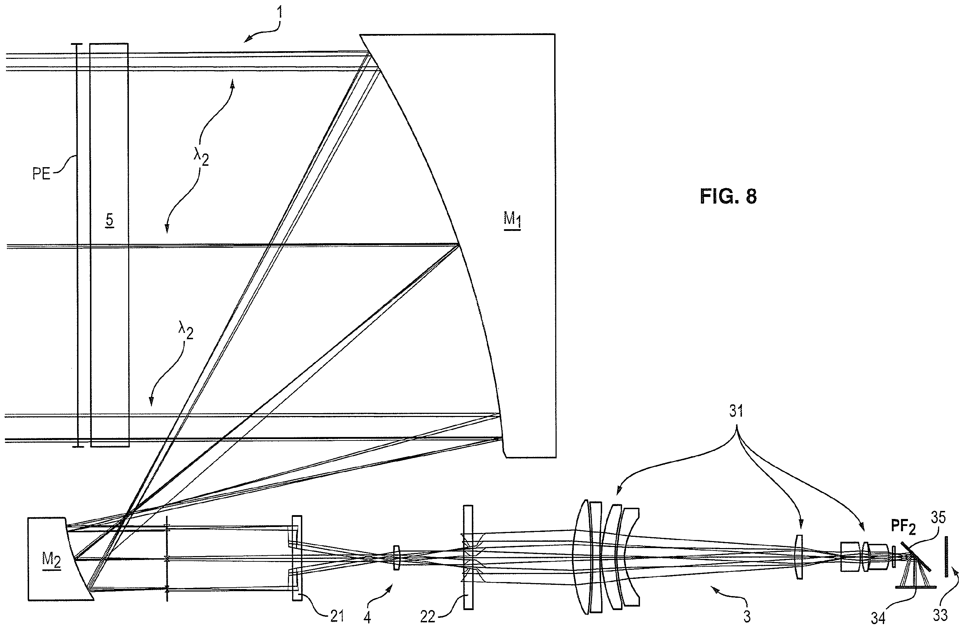

- les figures 7 et 8 représentent un troisième exemple d'un mode de réalisation possible d'un dispositif selon l'invention, avantageusement utilisé dans un système de conduite de tir ;
- la figure 7 représente schématiquement une vue de côté d'un dispositif pour la première bande de longueurs d'onde ; et
- la figure 8 représente schématiquement une vue de côté d'un dispositif pour la deuxième bande de longueurs d'onde ;

Sur l'ensemble des figures, les éléments similaires portent des références numériques identiques.

DESCRIPTION DETAILLEE

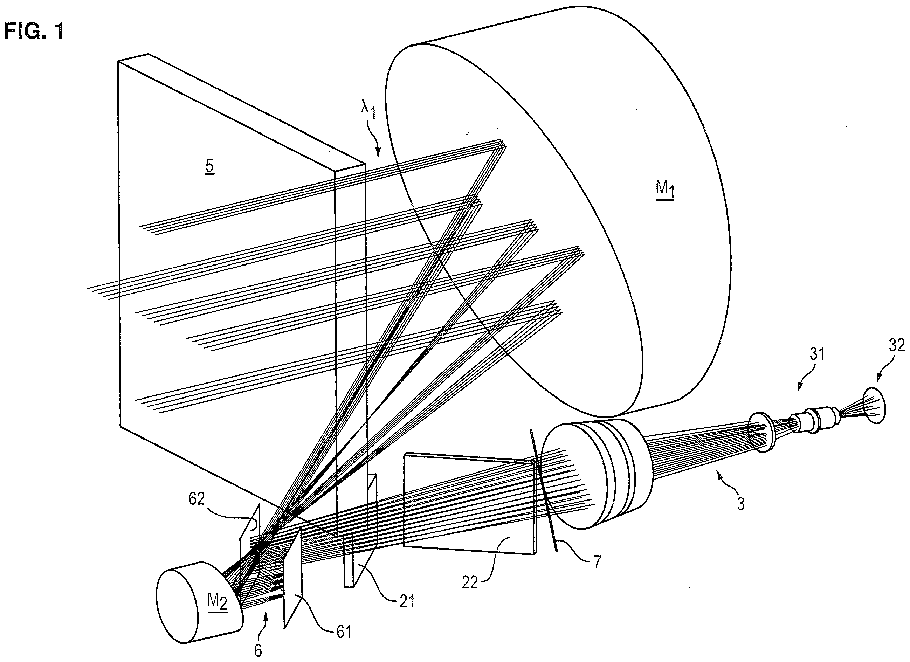

Comme le montrent les figures 1 à 8, un dispositif 1 selon l'invention est adapté pour recevoir un flux lumineux incident comportant une première bande $\lambda1$ de longueurs d'onde et une deuxième bande $\lambda2$ de longueurs d'onde.

La première bande $\lambda1$ de longueurs d'onde et la deuxième bande $\lambda2$ de longueurs d'onde sont distinctes l'une de l'autre.

A titre d'exemple non limitatif, la première bande $\lambda1$ de longueurs d'onde peut être une bande infrarouge IR II (3-5$\mu$m) ou IR III (8-12$\mu$m), et la deuxième bande $\lambda2$ de longueurs d'onde peut être une bande LASER à 1,50-1,59$\mu$m.

Le dispositif 1 permet d'exploiter la première bande $\lambda1$ et la deuxième bande $\lambda2$, qui ont pourtant des distances de focalisation différentes, sans pièce mobile pour assurer un quelconque changement de champ optique.

A cet effet, le dispositif 1 comporte principalement un miroir primaire M1 et un miroir secondaire M2, ainsi qu'une première lame 21 semi-réfléchissante dichroïque, et une deuxième lame 22 semi-réfléchissante dichroïque.

Comme on peut le constater sur les figures, le miroir primaire M1 est adapté pour recevoir le flux lumineux incident et le réfléchir vers le miroir secondaire M2. Le miroir M1 est très avantageusement concave, et préférentiellement parabolique ou quasi parabolique.

Le miroir secondaire M2 est adapté pour recevoir le flux lumineux à partir du miroir primaire M1 et le réfléchir vers la première lame 21 semi-réfléchissante dichroïque. Le miroir M2 est préférentiellement concave et parabolique ou quasi parabolique également, pour assurer la conjugaison des pupilles.

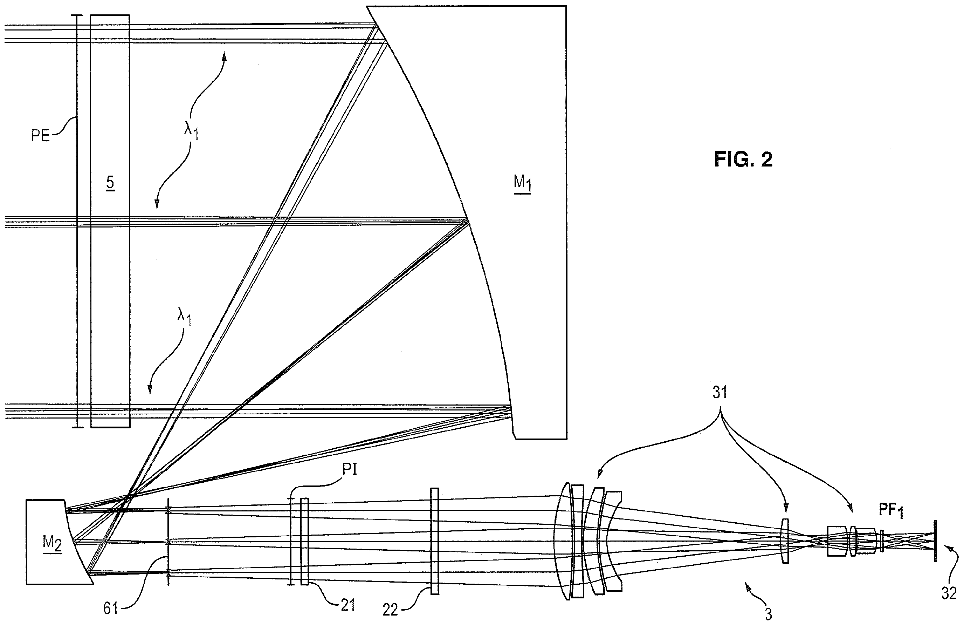

Comme le montrent les figures 1 et 2 par exemple, la première lame 21 semi-réfléchissante dichroïque et la deuxième lame 22 semi-réfléchissante dichroïque transmettent la première bande $\lambda1$ de longueurs d'onde.

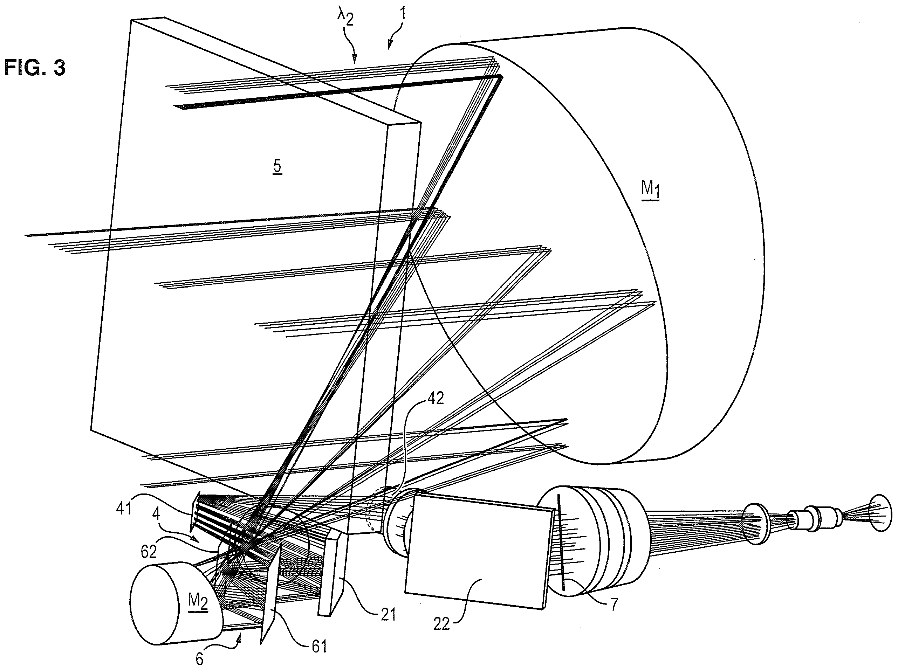

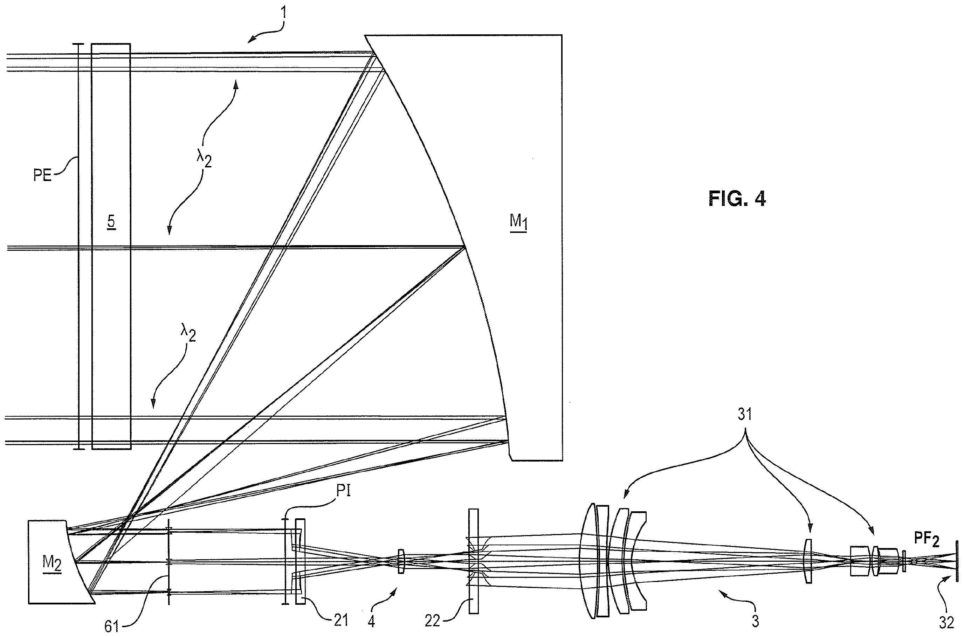

En revanche, comme le montrent les figures 3 et 4 par exemple, la première lame 21 semi-réfléchissante dichroïque et la deuxième lame 22 semi-réfléchissante dichroïque réfléchissent la deuxième bande $\lambda2$ de longueurs d'onde.

Ainsi la première lame 21 semi-réfléchissante dichroïque est adaptée pour transmettre la première bande $\lambda1$ de longueurs d'onde vers un objectif 3 à travers la deuxième lame 22 semi-réfléchissante dichroïque. L'objectif 3 est décrit plus en détail dans la suite de la présente description.

En revanche, le dispositif 1 comporte en outre un système 4 de double coudage de la deuxième bande $\lambda2$ de longueurs d'onde, afin d'allonger le trajet optique de la deuxième bande $\lambda2$ dans le dispositif 1, sans déplacement de pièce mobile. En outre, la première lame 21 semi-réfléchissante dichroïque est adaptée pour réfléchir la deuxième bande $\lambda2$ de longueurs d'onde vers le système 4 de double coudage de la deuxième bande $\lambda2$ de longueurs d'onde.

De même, la deuxième 22 lame semi-réfléchissante dichroïque est adaptée pour recevoir la deuxième bande $\lambda2$ de longueurs d'onde à partir du système 4 de double coudage, et pour réfléchir la deuxième bande $\lambda2$ de longueurs d'onde vers l'objectif 3.

Le dispositif définit par conséquent deux voies : la première voie pour la première bande $\lambda1$, et la deuxième voie pour la deuxième bande $\lambda2$.

La première voie comporte ainsi le miroir M1, le miroir M2, la première lame 21 et la deuxième lame 22, utilisées toutes les deux en transmission.

La deuxième voie comporte ainsi le miroir M1, le miroir M2, la première lame 21, utilisée en réflexion, le système 4, et la deuxième lame 22, utilisée également en réflexion.

Par ailleurs, les deux voies du dispositif partagent une pupille d'entrée PE, commune aux deux miroirs M1 et M2, à travers laquelle passe le flux lumineux incident et matérialisée par un hublot 5.

De manière très préférentielle, le miroir primaire M1 et le miroir secondaire M2 définissent un système catoptrique afocal, à plan image intermédiaire réel, préférentiellement à l'afocal galiléique sans plan image intermédiaire réel. Les miroirs M1 et M2 permettent de manière connue de s'affranchir du chromatisme et de corriger la coma et l'aberration sphérique. Ils assurent ainsi de bonnes performances spectrales et une bonne séparation des bandes $\lambda1$ et $\lambda2$ en faisceaux parallèles, tout en étant de structure simple à mettre en oeuvre. La pupille d'entrée PE du dispositif 1 est située à proximité du foyer objet du miroir primaire M1. L'image réelle de la pupille PE est envoyée à l'infini entre les deux miroirs M1 et M2. Le miroir secondaire M2 est alors adapté pour recevoir le flux lumineux à partir du miroir primaire M1 et le réfléchir pour former une pupille intermédiaire PI réelle, située à proximité du foyer image du miroir secondaire M2.

La conjugaison des pupilles PE et PI permet, tout en assurant un véhiculage du champ, de garder une taille du hublot 5 d'entrée relativement faible,.

Avantageusement, la première lame 21 semi-réfléchissante dichroïque est située à proximité du foyer image du miroir secondaire M2, pour améliorer l'efficacité du véhiculage de la pupille PI dans le système 4 notamment.

Le système 4 formant double coudage assure outre le rapport de focale et la conjugaison de champ, la conjugaison des pupilles grâce à l'adjonction d'un groupe de champ judicieusement placé. Le plan image intermédiaire du système 4 est conjugué du plan image intermédiaire placé entre les miroirs M1 et M2. Le plan pupillaire en sortie du système 4 peut coïncider avec le plan pupillaire PI

Afin d'obtenir un encombrement stérique faible, compatible avec des applications militaires, le dispositif 1 présente une structure repliée avec les miroirs M1 et M2.

Sur les figures 1 à 4 par exemple, le miroir primaire M1 et le miroir secondaire M2 sont décalés l'un par rapport à l'autre, pour former un dispositif hors d'axe.

Sur les figures 5 et 6 par exemple, le miroir primaire M1 comporte une ouverture 10 centrale et le miroir secondaire M2 est placé dans l'axe de l'ouverture centrale 10, pour former un dispositif 1 sur axe.

MISE EN OEUVRE PREFERENTIELLE

Le dispositif 1 est très avantageusement, mais non limitativement, utilisé dans un système optique formant viseur, par exemple de conduite de tir, et comportant un objectif 3 bispectral, pour permettre par exemple d'une part une fonction de reconnaissance d'une cible, obtenue par une première voie, et d'autre part une fonction d'identification de la cible, obtenue par une deuxième voie.

Les figures 1 à 6 montrent que le système peut comporter en outre un capteur 32 bispectral, sensible dans les bandes $\lambda1$ et $\lambda2$, ou peut comporter deux capteurs monospectraux 33 et 34, la bande $\lambda1$ et la bande $\lambda2$ étant séparées par une lame semi-réfléchissante dichroïque 35 comme le montrent les figures 7 et 8.

Les figures montrent également que l'objectif 3 comporte notamment les lentilles 31 de focalisation de la première bande $\lambda1$ et de la deuxième bande $\lambda2$. L'objectif 3 présente notamment avantageusement un plan image intermédiaire, pour conjuguer la pupille PI à une pupille de sortie - également appelée pupille froide quand l'objectif 3 comporte un cryostat non représenté dans le cas d'application dans l'infrarouge - PF1 (figure 2 par exemple) ou PF2 (figure 4 par exemple) placée devant le capteur 32 ou les capteurs 33 et 34, et par conséquent conjuguer la pupille PF1 ou PF2 avec la pupille PE, pour assurer à la fois la conjugaison des images et la conjugaison des pupilles.

Bien entendu, les lentilles 31 de l'objectif 3 corrigent les deux bandes $\lambda1$ et $\lambda2$.

A titre d'exemple non limitatif, la reconnaissance peut être réalisée par la première voie dans la première bande $\lambda1$, formant une voie infrarouge (IR), par exemple dans la bande 3-5$\mu$m (bande II) ou la bande 8-12$\mu$m (bande III).

L'identification est réalisée par la deuxième voie dans la deuxième bande $\lambda2$, formant une voie d'imagerie active (IA).

On comprend que l'émission d'un faisceau d'éclairage LASER est réalisée par une source LASER, très avantageusement à sécurité oculaire (émission dans la bande 1,5$\mu$m-1,59$\mu$m), qui ne fait pas l'objet de l'invention et qui est connue de l'homme du métier. L'intégration par le capteur 32 ou 34 de la voie IA doit être synchrone du tir du faisceau d'éclairage LASER, et retardée du temps de vol nécessaire faisceau d'éclairage LASER pour parcourir l'aller et le retour de la distance cible - système optique.

Il existe une inversion d'image entre la voie IA et la voie IR, que le capteur 32 ou 33 et 34 peut gérer par traitement d'images. S'il est nécessaire de garder l'image dans le même sens entre la voie IR et la voie IA, l'objectif 3 peut comporter, de manière connue, un prisme d'Abbe dans le trajet optique.

Dans le cas où un capteur 32 bispectral est utilisé, le capteur est préférentiellement matriciel, et capte les bandes $\lambda1$ et $\lambda2$ soit simultanément soit alternativement. Le capteur 32 peut donc comporter une matrice constituée d'un ou deux plans de détection.

Le système 4 de double coudage de la deuxième bande $\lambda2$ de longueurs d'onde est constitué d'un dispositif préférentiellement afocal optique, de grossissement égal à deux fois le rapport des pas pixels des détecteurs dans les deux bandes permettant d'assurer les conjugaisons de champ et de pupilles.

PREMIER EXEMPLE DE MODE DE REALISATION

Les figures 1 à 4 représentent un premier exemple d'un mode de réalisation possible d'un dispositif selon l'invention, avantageusement utilisé dans un système de conduite de tir. Par conséquent dans ce premier exemple, la première voie est une voie IR et une deuxième voie est une voie IA.

Comme il a été expliqué dans les développements précédents, dans le premier exemple de mode de réalisation, les miroirs M1 et M2, les lames 21 et 22 et le capteur 32 sont communs aux deux voies IR et IA, la voie IA passe de plus par le système 4.

Pour obtenir des performances de portée satisfaisantes, la voie IR a un champ instantané de vision (Instantaneous Field Of View - IFOV) de 40μrd et la voie IA un IFOV de 20μrd. Par conséquent, si les pas pixels des détecteurs des voies IR et IA sont identiques, la distance focale de la voie IR est d'au moins 600mm, et est d'au moins 1200mm pour la voie IA (c'est-à-dire le double).

En outre, pour obtenir un flux lumineux suffisant pour la voie IA et pour la voie IR, les deux voies ont une pupille d'entrée PE commune de 150 mm de diamètre, matérialisée par le hublot 5 d'entrée.

Pour réduire au maximum les encombrements stériques au niveau du dispositif 1,

- le miroir primaire M1 est un miroir hors d'axe de 150mm de distance focale, et
- le miroir secondaire M2 est un miroir hors d'axe de -25mm de distance focale,

soit un rapport 6X.

Les deux miroirs M1 et M2 sont ouverts à

$$F/1$$

qui est la valeur limite à atteindre pour ne pas trop dégrader les performances ni compliquer la réalisation et la tenue des miroirs.

De manière classique, les deux lames 21 et 22 semi-réfléchissantes utilisent des traitements dichroïques, par exemple sur des lames de fluorine, pour assurer la semi-réflexion. Il est plus aisé de laisser passer les grandes longueurs d'onde et de réfléchir les courtes longueurs d'onde dans ce genre de traitements : les lames 21 et 22 réfléchissent la voie IA à 1.50-1.55μm et transmettent la voie IR autour de 3.2-4.2μm. Les lames 21 et 22 fonctionnent en faisceau parallèle, avec un champ limité à

$$0.0175 \cdot G \text{ (en radians)}$$

où

G est le grossissement de l'afocal, et
0.0175 correspond à la valeur numérique de la tangente d'un angle de 1° (champ de l'afocal).

Les critères connus de résolution de Johnson, associés aux fonctions de reconnaissance et d'identification, imposent un facteur deux sur la résolution angulaire des deux voies. C'est pourquoi dans le premier exemple où un détecteur commun est utilisé pour imager dans les deux bandes spectrales, le système 4 forme un doubleur de distance focale sur la voie IA par rapport à la voie IR. De plus, la pupille PF2 (voie IA) est moitié plus petite que la pupille PF1 (voie IR), cette dernière étant de l'ordre de 25 mm.

Le système 4 de double coudage multiplie donc par deux la distance focale de la voie IA, et comporte à cet effet deux miroirs 41 et 42 inclinés à 45°, le miroir 41 étant parallèle à la première lame 21 et le miroir 42 étant parallèle à la deuxième lame 22.

Le système 4 est un système afocal de grossissement X2 et ajusté de telle sorte qu'il ne dépasse par exemple que de 30 mm de la largeur du miroir primaire M1 (150mm).

Les lentilles du système 4, non représentées sur les figures 1 à 4 (mais référencées par 43 sur la figure 6), ne travaillant qu'à 1.55μm environ, peuvent par exemple être en verre standard, ce qui leur donne une bonne transmission et de très bons traitements antireflets, pour obtenir un taux de transmission de 88% environ en entrée d'objectif 3 pour la bande IA à 1.55μm.

L'objectif 3 a une distance focale de 100mm, avec une pupille PF1 ou PF2 projetée très en amont du détecteur 32 pour pouvoir coïncider avec la pupille de sortie intermédiaire PI: l'objectif 3 travaille à

- F/4 en mode passif IR II, et
- F/8 en mode IA.

Le champ de la voie IA est de

$$0.37° \text{X} 0.28°$$

soit 0.472° de champ diagonal.

Le capteur 32 est très avantageusement matriciel et a par exemple 320 X 256 pixels de 24 μm, soit un champ de 7.68X6.144 mm$^2$.

Du fait qu'il est utilisé dans un système optique viseur à guidage de tir, le dispositif 1 comporte avantageusement un stabilisateur 6 de la ligne de visée du dispositif 1, mais qui ne participe aucunement à un changement de champ quelconque.

A cet effet, comme le montrent les figures 1 à 4, le stabilisateur 6 comporte deux miroirs 61 et 62 de stabilisation, les miroirs 61 et 62 étant communs aux voies IR et IA. On choisit les miroirs 61 et 62 avec un diamètre minimal permettant d'assurer la fonction de stabilisation.

Les miroirs 61 et 62 sont avantageusement placés au voisinage du plan pupillaire intermédiaire PI et couplés par exemple à un gyromètre ou un gyroscope via un actionneur permettant de les incliner en fonction des informations données par le gyromètre ou le gyroscope.

Selon une variante non représentée sur les figures, le stabilisateur peut ne comporter qu'un seul miroir, placé après les lames semi-réfléchissantes, et devant l'objectif, le miroir étant actionné par un actionneur commandé par un logiciel gérant la différence d'inclinaison demandée par la voie IR et IA (dans un rapport 2).

Le dispositif 1 comporte en outre avantageusement un stabilisateur 7 fin, qui assure la fonction de stabilisation fine (mais aucunement un quelconque changement de champ), notamment de la voie IR. En effet, du fait des temps d'intégration très courts par le capteur 32 dans le domaine de l'IA, il n'est pas nécessaire que le dispositif 1 comporte une stabilisation fine de la voie IA.

Le stabilisateur 7 est préférentiellement placé en aval de la deuxième lame 22, mais peut également n'être placé que sur la bande IR.

Le stabilisateur 7 comporte un miroir de stabilisation fine, pour compenser les erreurs de stabilisation de la ligne de visée IR.

Pour la ligne IA, la mesure précise de la ligne de visée est nécessaire et suffisante pour compenser par traitement d'image les effets

- de la déstabilisation résiduelle mesurée par le gyroscope ou le gyromètre précité et
- des écarts angulaires réalisés par le stabilisateur 7 de stabilisation fine.

## DEUXIEME EXEMPLE DE MODE DE REALISATION

Les figures 5 et 6 montrent un exemple d'un dispositif conforme aux développements qui précèdent, mais dans lequel le miroir primaire M1 comporte une ouverture 10 centrale et le miroir secondaire M2 est placé dans l'axe de l'ouverture centrale 10, pour former un dispositif sur axe. L'occultation centrale s'effectue sans perte significative de performance.

Sur les figures 5 et 6, le miroir secondaire M2 est concave, mais selon une variante également possible non représentée, le miroir secondaire peut également être convexe.

On remarque qu'il est bien entendu possible de couder l'objectif 3 au moins une fois (ici l'objectif est coudé deux fois) grâce à des miroirs 36 de coudage.

## TROISIEME EXEMPLE DE MODE DE REALISATION

Les figures 7 et 8 montrent un exemple d'un dispositif conforme aux développements qui précèdent, mais dans lequel le système comporte deux capteurs 33 et 34, un capteur étant sensible dans une première bande et un capteur étant sensible dans une autre bande. Une lame 35 semi-réfléchissante assure la séparation des deux bandes.

## Revendications

1. Dispositif (1) adapté pour recevoir un flux lumineux incident comportant une première bande ($\lambda$1) de longueurs d'onde et une deuxième bande ($\lambda$2) de longueurs d'onde, la première bande et la deuxième bandes étant distinctes entre elles, comportant :

   - un miroir primaire (M1),
   - un miroir secondaire (M2),
   - une première lame (21) semi-réfléchissante dichroïque, et
   - une deuxième lame (22) semi-réfléchissante dichroïque,

   le miroir primaire (M1) étant adapté pour recevoir le flux lumineux incident et le réfléchir vers le miroir secondaire (M2) ;
   le miroir secondaire (M2) étant adapté pour recevoir le flux lumineux à partir du miroir primaire (M1) et le réfléchir vers la première lame (21) semi-réfléchissante;
   le dispositif étant **caractérisé en ce qu'**il comporte en outre :

   un système (4) de double coudage de la deuxième bande ($\lambda$2) de longueurs d'onde,
   la première lame (21) semi-réfléchissante étant adaptée pour

   transmettre la première bande ($\lambda$1) de longueurs d'onde vers un objectif (3) à travers la deuxième lame (22) semi-réfléchissante, et pour réfléchir la deuxième bande ($\lambda$2) de longueurs d'onde vers le système (4) de double coudage de la deuxième bande ($\lambda$2) de longueurs d'onde ;

   la deuxième (22) lame semi-réfléchissante étant en outre adaptée pour

   recevoir la deuxième bande ($\lambda$2) de longueurs d'onde à partir du système (4) de double coudage, et pour réfléchir la deuxième bande ($\lambda$2) de longueurs d'onde vers l'objectif (3),

   le dispositif comportant une pupille (PE) d'entrée réelle à travers laquelle passe le flux lumineux incident, le miroir secondaire (M2) étant adapté pour recevoir le flux lumineux à partir du miroir primaire (M1) et le réfléchir pour former une pupille intermédiaire (PI) réelle.

2. Dispositif (1) selon la revendication 1, dans lequel la pupille d'entrée (PE) du dispositif (1) est située à proximité d'un foyer objet du miroir primaire (M1), et la pupille intermédiaire (PI) réelle est située à proximité d'un foyer image du miroir secondaire (M2).

3. Dispositif selon l'une des revendications 1 ou 2, dans lequel la première lame (21) semi-réfléchissante est située à proximité d'un foyer image du miroir secondaire (M2).

4. Dispositif selon l'une des revendications 1 à 3, dans lequel le miroir primaire (M1) et le miroir secondaire (M2) définissent un système catoptrique afocal à plan image intermédiaire réel.

5. Dispositif selon l'une des revendications 1 à 4, dans lequel le miroir primaire (M1) et le miroir secondaire (M2) sont décalés l'un par rapport à l'autre, pour former un dispositif hors d'axe.

6. Dispositif selon l'une des revendications 1 à 4, dans lequel le miroir primaire (M1) comporte une ouverture (10) centrale et le miroir secondaire (M2) est placé dans l'axe de l'ouverture centrale (10), pour former un dispositif sur axe.

7. Dispositif selon la revendication 6, dans lequel le miroir secondaire (M2) est concave ou convexe.

8. Système optique comportant un objectif (3) bispectral, **caractérisé en ce qu'**il comporte un dispositif (1) selon l'une des revendications 1 à 7.

9. Système selon la revendication 8, comportant en outre un capteur (32) bispectral ou deux capteurs (33, 34) monospectraux.

**Patentansprüche**

1. Vorrichtung, (1), angepasst um einen einfallenden Lichtfluss zu empfangen, umfassend ein erstes Band ($\lambda$1) von Wellenlängen und ein zweites Band ($\lambda$2) von Wellenlängen, wobei das erste Band und das zweite Band untereinander verschieden sind, umfassend:

  - einen primären Spiegel (M1),
  - einen sekundären Spiegel (M2),
  - eine erste dichroitische, halb reflektierende Platte (21) und
  - eine zweite dichroitische, halb reflektierende Platte (22),

    wobei der primäre Spiegel (M1) angepasst ist, um den einfallenden Lichtfluss zu empfangen und ihn auf den sekundären Spiegel (M2) zu reflektieren;
    wobei der sekundäre Spiegel (M2) angepasst ist, um den Lichtfluss vom primären Spiegel (M1) zu empfangen und ihn auf die erste halb reflektierende Platte (21) zu reflektieren;
    wobei die Vorrichtung **dadurch gekennzeichnet ist, dass** sie außerdem Folgendes umfasst:

      ein System (4) zur zweifachen Krümmung des zweiten Bands ($\lambda$2) von Wellenlängen,
      wobei die erste halb reflektierende Platte (21) angepasst ist, um

        das erste Band ($\lambda$1) von Wellenlängen hin zu einem Objektiv (3) über die zweite halb reflektierende Platte (22) zu übertragen, und um das zweite Band ($\lambda$2) von Wellenlängen hin zum System (4) zur zweifachen Krümmung des zweiten Bands ($\lambda$2) von Wellenlängen zu reflektieren;

      wobei die zweite (22) halbe reflektierende Platte außerdem angepasst ist, um

        das zweite Band ($\lambda$2) von Wellenlängen vom System (4) zur zweifachen Krümmung zu empfangen, und um das zweite Band ($\lambda$2) von Wellenlängen hin zum Objektiv (3) zu reflektieren,

    wobei die Vorrichtung eine reelle Eintrittspupille (PE) umfasst, durch die der einfallende Lichtstrom passiert,
    wobei der sekundäre Spiegel (M2) angepasst ist, um den Lichtfluss vom primären Spiegel (M1) zu empfangen und ihn zu reflektieren, um eine reelle Zwischenpupille (PI) zu bilden.

2. Vorrichtung (1) nach Anspruch 1, wobei die Eingangspupille (PE) der Vorrichtung (1) in der Nähe eines Objektivbrennpunkts des primären Spiegels (M1) angeordnet ist und die reelle Zwischenpupille (PI) in der Nähe eines Bildbrennpunkts des sekundären Spiegels (M2) angeordnet ist.

3. Vorrichtung nach einem der Ansprüche 1 oder 2, wobei die erste halb reflektierende Platte (21) in der Nähe eines Bildbrennpunkts des sekundären Spiegels (M2) angeordnet ist.

4. Vorrichtung nach einem der Ansprüche 1 bis 3, wobei der primäre Spiegel (M1) und der sekundäre Spiegel (M2) ein katoptrisches System definieren, das afokal zum reellen Zwischenbildplan ist.

5. Vorrichtung nach einem der Ansprüche 1 bis 4, wobei der primäre Spiegel (M1) und der sekundäre Spiegel (M2) mit Bezug aufeinander versetzt sind, um eine Vorrichtung außerhalb der Achse zu bilden.

6. Vorrichtung nach einem der Ansprüche 1 bis 4, wobei der primäre Spiegel (M1) eine zentrale Öffnung (10) umfasst und der sekundäre Spiegel (M2) in der Achse der zentralen Öffnung (10) platziert ist, um eine Vorrichtung auf der Achse zu bilden.

7. Vorrichtung nach Anspruch 6, wobei der sekundäre Spiegel (M2) konkav oder konvex ist.

8. Optisches System, umfassend ein bispektrales Objektiv (3), **dadurch gekennzeichnet, dass** es eine Vorrichtung (1) nach einem der Ansprüche 1 bis 7 umfasst.

9. System nach Anspruch 8, umfassend außerdem einen bispektralen Sensor (32) oder zwei monospektrale Sensoren (33, 34).

## Claims

1. Device (1) designed to receive an incident light flux comprising a first band ($\lambda 1$) of wavelengths and a second band ($\lambda 2$) of wavelengths, the first band and the second band being separate from each other, comprising:

   - a primary mirror (M1),
   - a secondary mirror (M2),
   - a first semi-reflective dichroic filter (21), and
   - a second semi-reflective dichroic filter (22),

   the primary mirror (M1) being designed to receive the incident light flow and reflect it towards the secondary mirror (M2);
   the secondary mirror (M2) being designed to receive the light flow from the primary mirror (M1) and reflect it towards the first semi-reflective filter (21);
   the device being **characterised in that** it further comprises:

   a double bending system (4) of the second band ($\lambda 2$) of wavelengths,
   the first semi-reflective filter (21) being designed to

   transmit the first band ($\lambda 1$) of wavelengths towards an objection (3) through the second semi-reflective filter (22), and to
   reflect the second band ($\lambda 2$) of wavelengths towards the double bending system (4) of the second band ($\lambda 2$) of wavelengths;

   the second semi-reflective filter (22) being further designed to

   receive the second band ($\lambda 2$) of wavelengths from the double bending system (4), and to
   reflect the second band ($\lambda 2$) of wavelengths towards the objection (3),

   the device comprising a real entrance pupil (PE) through which the incident light flow passes,
   the secondary mirror (M2) being designed to receive the light flow from the primary mirror (M1) and reflect it in order to form a real intermediate pupil (PI).

2. Device (1) according to claim 1, wherein the entrance pupil (PE) of the device (1) is situated near to a primary focal point of the primary mirror (M1), and the real intermediate pupil (PI) is situated near to a secondary focal point of the secondary mirror (M2).

3. Device according to either claim 1 or claim 2, wherein the first semi-reflective filter (21) is situated near to a secondary focal point of the secondary mirror (M2).

4. Device according to one of claims 1 to 3, wherein the primary mirror (M1) and the secondary mirror (M2) define an afocal catoptric system with a real intermediate image plane.

5. Device according to one of claims 1 to 4, wherein the primary mirror (M1) and the secondary mirror (M2) are offset relative to each other, in order to form an off-axis device.

6. Device according to one of claims 1 to 4, wherein the primary mirror (M1) comprises a central opening (10) and the secondary mirror (M2) is placed in the axis of the central opening (10), in order to form an on-axis device.

7. Device according to claim 6, wherein the secondary mirror (M2) is concave or convex.

**8.** Optical system comprising a bispectral lens (3), **characterised in that** it comprises a device (1) according to one of claims 1 to 7.

**9.** System according to claim 8, further comprising a bispectral sensor (32) or two monospectral sensors (33, 34).

FIG. 1

FIG. 2

FIG. 3

FIG. 4

FIG. 5

FIG. 6

FIG. 7

FIG. 8

**EP 2 579 087 B1**

**Documents brevets cités dans la description**

- US 2003185549 A
- US 20110051121 A